# EUROPÄISCHE PATENTANMELDUNG

(11) **EP 2 706 271 A1**
(43) Veröffentlichungstag der Anmeldung: **12.03.2014**
(21) Anmeldenummer: 12183913.8
(22) Anmeldetag: 11.09.2012
(51) Int. Cl.: F16J 3/04, B29C 45/16, B29C 45/44

(54) **Faltenbalg und Verfahren zur Herstellung eines Faltenbalges**

(71) Anmelder: Gummi Noller GmbH, 27283 Verden (DE)
(72) Erfinder: Baukloh, Horst, 58540 Meinerzhagen (DE)
(74) Vertreter: Dörner, Kötter & Kollegen

(57) **Zusammenfassung**

Die Erfindung betrifft einen Faltenbalg, umfassend ein röhrenförmiges, ziehharmonikaartig zusammenfaltbares Balgteil (2) aus einem ersten Material, an dem an wenigstens einen Ende ein hülsenförmiges Anschlussstück (3) aus einem zweiten Material zum Anschluss an einem Maschinenelement angeordnet ist, wobei der Faltenbalg (1) als einteiliges Mehrkomponenten-Spritzgießteil ausgebildet ist. Die Erfindung betrifft weiterhin ein Verfahren zur Herstellung eines solchen Faltenbalges.

## Beschreibung

Die Erfindung betrifft einen Faltenbalg nach dem Oberbegriff des Patentanspruchs 1. Die Erfindung betrifft weiterhin ein Verfahren zur Herstellung eines Faltenbalgs nach dem Patentanspruch 9.

Faltenbälge bestehen im Wesentlichen aus einem rotationssymmetrischen Körper, in dem in Längsrichtung mehrere Falten ausgeformt sind, so dass sie ziehharmonikaartig zusammenfaltbar sind. Faltenbälge werden verwendet, um sich mechanisch ineinander schiebende Maschinenteile, Lager in Gelenken oder auch knickende Kabel vor Fremdeinflüssen, insbesondere Verschmutzungen zu schützen. Faltenbälge sind regelmäßig aus einem thermoplastischen Elastomer oder auch aus Gummi hergestellt. Die Herstellung der Faltenbälge erfolgt durch Formblasen. Dabei entstehen an den äußeren Spitzen des ziehharmonikaartigen Balgteils Dünnstellen, welche zur Rissbildung führen können. Um diesen Schwachpunkt zu vermeiden, ist es bekannt, die Wandstärke des aufzublasenden Schlauches an diesen Stellen überproportional zu erhöhen. Nachteilig an diesem Herstellungsverfahren ist, dass es hierbei zu signifikanten Wandstärkeverdickungen kommt. Zudem ist beim Blasen von beispielsweise konischen Faltenbälgen mit einem erhöhten Abfallaufkommen auf Grund des anschließend zu entfernenden Abfallbutzens zu rechnen. Weiter ist es bei dem vorbekannten Herstellungsverfahren erforderlich in einem nachgeschalteten Arbeitsschritt die zur Befestigung des Faltenbalgs an dem jeweiligen Einsatzort erforderlichen Anschlussstücke anzubringen. Die Befestigung der Anschlussstücke erfolgt regelmäßig in einem nachgeschalteten Kunststoffschweißprozess.

Hier will die Erfindung Abhilfe schaffen. Der Erfindung liegt die Aufgabe zu Grunde, einen Faltenbalg zu schaffen, der rationell herstellbar ist und bei dem Dünnstellen, die zur Rissbildung führen können, vermieden sind. Gemäß der Erfindung wird diese Aufgabe durch einen Faltenbalg mit den Merkmalen des Patentanspruchs 1 gelöst.

Mit der Erfindung ist ein Faltenbalg geschaffen, der rationell herstellbar ist und bei dem Dünnstellen, die zur Rissbildung führen können, vermieden sind. Durch die Ausbildung des Faltenbalgs als einteiliges Mehrkomponenten- Spritzgießteil ist die Herstellung in einem einzigen Spritzgießprozess möglich, wobei eine konstante Wandstärke erzielt ist. Unter der Bezeichnung "einteiliges Mehrkomponenten - Spritzgießteil" ist jedes Spritzgießteil zu verstehen, in dem wenigstens zwei Komponenten unterschiedlicher Materialien vorhanden sind. Dabei kann eine Komponente - hier insbesondere das Anschlussstück - entweder eingelegt und angespritzt oder auch im Spritzgießprozess vollständig hergestellt sein.

In Weiterbildung der Erfindung besteht das Balgteil aus einem thermoplastischen Elastomer, aus Gummi oder aus Silikon. Vorteilhaft besteht das wenigstens eine Anschlussstück aus einem Hart- Thermoplast, bevorzugt Polypropylen. Je nach Verwendungszweck kann auch Polyamid / GV (glasfiber verstärkt) eingesetzt werden. Hierdurch ist eine kostengünstige Herstellung, verbunden mit einer zuverlässigen Verbindung zwischen Balgteil und Anschlussstück erzielt.

In weiterer Ausgestaltung der Erfindung ist in dem Balgteil ein Gewebe aus einem dritten Material eingelegt und umspritzt. Hierdurch ist eine größere Festigkeit des Balgteils erzielt.

In weiterer Ausgestaltung der Erfindung weist das wenigstens eine Anschlussstück im Übergang zum Balgteil einen Hinterschnitt auf, in dem das Balgteil verankert ist. Hierdurch ist eine zuverlässige Verbindung zwischen dem Balgteil als Weichkomponente und dem Anschlussstück als Hartkomponente bewirkt.

In Weiterbildung der Erfindung weist wenigstens ein Anschlussstück umlaufend zumindest bereichsweise einen Hinterschnitt zur Befestigung an einem Maschinenelement auf. Hierdurch ist eine einfache Befestigung des Faltenbalgs an dem Maschinenelement erzielt. Vorteilhaft ist der Hinterschnitt durch eine zumindest bereichsweise umlaufende, an dem Anschlussstück angeordnete Wulst gebildet. Alternativ oder zusätzlich können auch weitere Befestigungselemente zur Befestigung des Anschlussstücks an ein Maschinenelement angeordnet sein.

Der Erfindung liegt weiterhin die Aufgabe zu Grunde, ein Verfahren zur Herstellung eines Faltenbalges zu schaffen, welches eine rationelle Herstellung des Faltenbalges unter Vermeidung von Dünnstellen, die zur Rissbildung führen können, ermöglicht. Gemäß der Erfindung wird diese Aufgabe durch die Merkmale des Patentanspruchs 9 gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

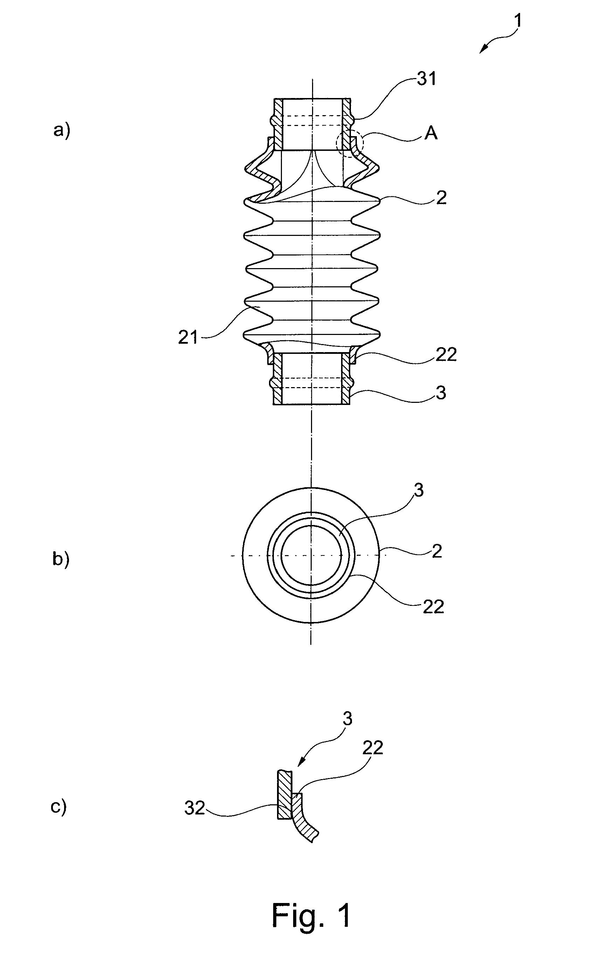

- Figur 1: die schematische Darstellung eines Faltenbalges
a) in Teilschnittdarstellung;
b) in der Draufsicht;
c) in einer Detaildarstellung des Übergangs "A";

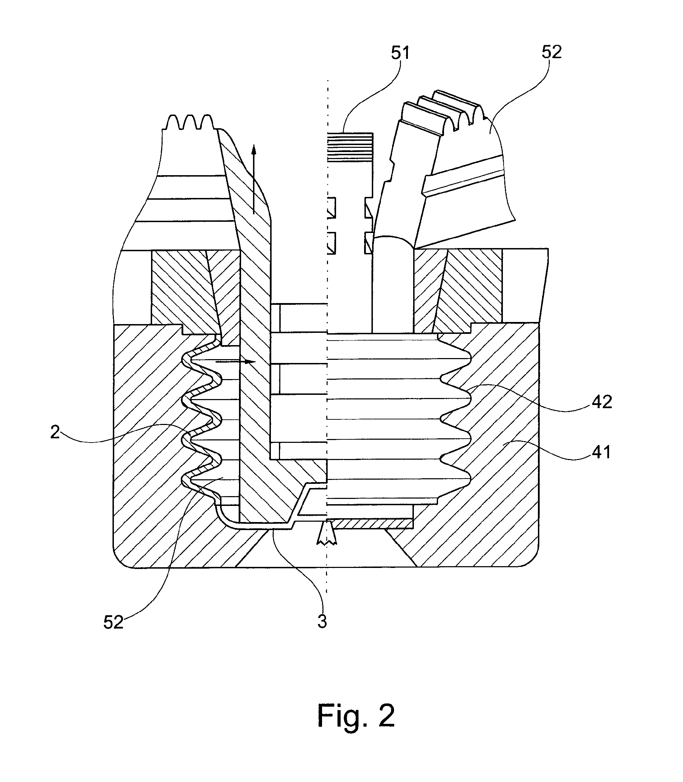

- Figur 2: die schematische Darstellung eines Spritzgießwerkzeugs zur Herstellung eines Faltenbalges.

Der als Ausführungsbeispiel gewählte Faltenbalg 1 besteht im Wesentlichen aus einem Balgteil 2, an dessen beiden Enden ein Anschlussstück 3 angeformt ist.

Das Balgteil 2 ist im Ausführungsbeispiel aus Silikon hergestellt und umfasst sechs Falten 21. Die Falten 21 ermöglichen eine Längenänderung des Faltenbalgs 1 in axialer Richtung sowie eine kardanische Auslenkbewegung. Das Balgteil 2 weist im Ausführungsbeispiel eine nahezu konstante Wandstärke auf.

Das Anschlussstück 3 ist im Ausführungsbeispiel aus Polypropylen hergestellt und als im Wesentlichen hohlzylindrisches Formteil ausgebildet. Etwa mittig ist an dem Anschlussstück 3 eine umlaufende Wulst 31 angeformt. An seinen dem Balgteil 2 zugewandten Ende ist an dem Anschlussstück 3 umlaufend ein Hinterschnitt 32 zum Verankern des endseitigen Anschlusssaums 22 des Balgteils 2 angeformt. In diesem Ausführungsbeispiel erfolgt die Verbindung zwischen Balgteil 2 und Anschlussstück 3 von weich (Balgteil) auf hart (Anschlussstück). Selbstverständlich kann die Verbindung auf von hart auf weich erfolgen. Hierbei wird das Balgteil 2 endseitig von dem Anschlussstück 3 außen umfasst. Im Ausführungsbeispiel ist der Faltenbalg im Wesentlichen hohlzylindrisch ausgebildet. Alternativ kann der Faltenbalg auch oval oder konisch gestaltet sein.

Die Herstellung eines erfindungsgemäßen Faltenbalges 1 erfolgt unter Verwendung eines Spritzgießwerkzeugs 4. Das Spritzgießwerkzeug 4 weist zwei Hälften 41 auf, deren Innenkontur 42 der Außenkontur des Faltenbalges 1 entspricht. In dem Spritzgießwerkzeug 4 ist ein Formkern 5 angeordnet, der im Wesentlichen aus einem Innenkern 51 und zwei Gruppen von relativ zum Innenkern verschiebbaren Segmenten 52 besteht, die in vorgegebener Reihenfolge derart um den Innenkern 51 angeordnet sind, dass sie in der Arbeitsposition des Formkerns 5 zusammen mit dem Innenkern 51 eine lückenlose Innenkontur des Faltenbalges bilden und in der Entformungsposition die Hinterschneidungen des Faltenbalges so freigeben, dass dieser vom Formkern 5 entfernbar ist. Der Aufbau eines solchen Werkzeugs ist dem Fachmann aus der DE 10 2010 004 227 B4 bekannt. In der Arbeitsposition des Formkerns 5 wird zunächst mit einem ersten Material - im Ausführungsbeispiel Silikon - das Balgteil 2 gespritzt. Nachfolgend wird über ein Anspritzsystem des Spritzgießwerkzeugs 4 an einem Ende des Balgteils mit einem zweiten Material - im Ausführungsbeispiel Polypropylen - das eingelegte Anschlussstück 3 angespritzt. Nach Kühlung des Spritzwerkzeugs 4 wird der Formkern 5 in die Entformungsposition verbracht, die beiden Werkzeughälften 41 des Spritzgießwerkzeugs 4 werden auseinander gefahren und der fertig gestellte Faltenbalg 1 wird entnommen. Im Stand der Technik sind auch so genannte Mehrkomponenten-Spritzgießwerkzeuge, insbesondere 2- Komponeten (2K) - Spritzgießwerkzeuge, welche vorliegend zum Einsatz kommen können. Mit Hilfe eines solchen Spritzgießwerkzeugs ist auch bei Einspritzen des als Hartkomponente ausgebildeten Anschlussstücks möglich.

## Patentansprüche

1. Faltenbalg, umfassend ein röhrenförmiges, ziehharmonikaartig zusammenfaltbares Balgteil (2) aus einem ersten Material, an dem an wenigstens einen Ende ein hülsenförmiges Anschlussstück (3) aus einem zweiten Material zum Anschluss an einem Maschinenelement angeordnet ist, **dadurch gekennzeichnet, dass** der Faltenbalg (1) als einteiliges Mehrkomponenten-Spritzgießteil ausgebildet ist.

2. Faltenbalg nach Anspruch 1, **dadurch gekennzeichnet, dass** das Balgteil (2) aus einem thermoplastischen Elastomer, aus Gummi oder aus Silikon besteht.

3. Faltenbalg nach Anspruch 1 oder 2, **dadurch gekennzeichnet, dass** das wenigstens eine Anschlussstück (3) aus einem Hart-Thermoplast, bevorzugt Polypropylen besteht.

4. Faltenbalg nach einem der vorgenannten Ansprüche, **dadurch gekennzeichnet, dass** in dem Balgteil (2) ein eingelegtes Gewebe aus einem dritten Material umgespritzt ist.

5. Faltenbalg nach einem der vorgenannten Ansprüche, **dadurch gekennzeichnet, dass** das Balgteil (2) eine gleich bleibende Wandstärke aufweist.

6. Faltenbalg nach einem der vorgenannten Ansprüche, **dadurch gekennzeichnet, dass** das wenigstens eine Anschlussstück (3) im Übergang zum Balgteil (2) einen Hinterschnitt (32) aufweist, in dem das Balgteil (2) verankert ist.

7. Faltenbalg nach einem der vorgenannten Ansprüche, **dadurch gekennzeichnet, dass** wenigstens ein Anschlussstück (3) umlaufend zumindest bereichsweise einen Hinterschnitt zur Befestigung an einem Maschinenelement aufweist.

8. Faltenbalg nach Anspruch 7, **dadurch gekennzeichnet, dass** der Hinterschnitt durch eine zumindest bereichsweise umlaufende, an dem Anschlussstück angeordnete Wulst (31) gebildet ist.

9. Verfahren zur Herstellung eines Faltenbalges nach einem der vorgenannten Ansprüche unter Verwendung eines Mehrkomponenten-Spritzgießwerkzeugs (4) mit einem Formkern (5), der im Wesentlichen aus einem Innenkern (51) und aus wenigstens zwei Gruppen von relativ zum Innenkern (51) verschiebbaren Segmenten (52) besteht, die in vorgegebener Reihenfolge derart um den Innenkern (51) angeordnet sind, dass sie in der Arbeitsposition des Formkerns (5) zusammen mit dem Innenkern (51) eine lückenlose Innenkontur des Faltenbalges (1) bilden und in der Entformungsposition die Hinterschneidungen des Faltenbalges (1) so freigeben, dass dieser vom Formkern (5) entfernbar ist, wobei in der Arbeitsposition des Formkerns (5) zunächst mit einem ersten Material das Balgteil (2) gespritzt und nachfolgend über wenigstens ein Anspritzsystem des Spritzgießwerkzeugs (4) an wenigstens einem Ende des Balgteils (3) mit einem zweiten, gegenüber dem ersten Material härteren Material ein Anschlussstück (3) angespritzt wird, nachfolgend der Formkern (5) in die Entformungsposition verbracht wird und zur Entnahme des Faltenbalges (1) anschließend das Werkzeug (4) geöffnet wird.
